# EUROPEAN PATENT SPECIFICATION

(11) **EP 2 151 661 B1**
(45) Date of publication and mention of the grant of the patent: **04.07.2012**
(21) Application number: 09167217.0
(22) Date of filing: 04.08.2009
(51) Int. Cl.: F41G 3/14

(54) **Pointing system for laser designator**
Zeigesystem für einen Laserdesignator
Système de pointage pour marqueur laser

(30) Priority: 06.08.2008 US 187238
(43) Date of publication of application: 10.02.2010
(73) Proprietor: Honeywell International Inc., Morristown, NJ 07962 (US)
(72) Inventor: Goossen, Emray R., Morristown, NJ 07962-2245 (US)
(74) Representative: Buckley, Guy Julian

(56) References cited:
- EP-A2- 0 165 170
- DE-A1- 19 729 483
- US-A- 3 696 248
- US-A- 5 831 724

## Description

### BACKGROUND OF THE INVENTION

It is well known to use laser designators for target aim-point or marking designation. Some laser designation units are small enough to mount on the barrel of a pistol or rifle and are adequate for manual adjustment. There are, however, designators mounted on mobile platforms, such as a UAV, that are used for aim point designation on targets such as ground targets, tanks, or even other aircraft. For such designators, it is necessary to provide a means for maintaining the aim point at or near a fixed place on the target as the target moves in the field. It is especially critical to maintain the laser designated aim point on the target for at least the length of time it takes to launch munitions. In conventional tracking systems, the laser designated aim point is often maintained by a human operator.

However, not only does such an approach unduly endanger ground personnel, who, in order to maintain the designated laser spot, are likely to be in the vicinity of the munition delivery point, such approach may be impracticable due to line-of-sight obstructions between the ground personnel and target.
German Patent Publication DE 19729483 discloses a land mine sensor which detects the difference between a mine and its surroundings.
US Patent Publication US 3696248 discloses a laser tracking system including a detector scanning a remote target replacing it with error signals.

### SUMMARY OF THE INVENTION

The present invention provides a system as defined in claim 1.
The system may include the features of any one or more of dependent claims 2 to 9.

In an embodiment, a system for illuminating an object of interest includes a platform, an illuminator, and a gimbaled sensor. The gimbaled sensor provides sensor data corresponding to a sensed condition associated with an area. The gimbaled sensor is configured to be articulated with respect to the platform. A first transceiver transceives communications to and from a ground control system. The ground system includes an operator control unit allowing a user to select and transmit to the first transceiver at least one image feature corresponding to the object of interest. An optical transmitter is configured to emit a signal operable to illuminate a portion of the sensed area proximal to the object of interest. A correction subsystem is configured to determine an illuminated-portion-to-object-of-interest error and, in response to the error determination, cause the signal to illuminate the object of interest. Platform motion compensation may be calculated from inertial sensing to provide outer loop error correction. Image feature position error relative to object of interest provides the fine inner loop compensation for motion and position compensation.

### BRIEF DESCRIPTION OF THE DRAWINGS

Preferred and alternative embodiments of the present invention are described in detail below with reference to the following drawings.

Figure 1 is a pictorial representation of an object-of-interest illumination system according to an embodiment of the invention;

Figure 2 is a block diagram illustrating an onboard feature-extraction and processing system that may be utilized in the object-of-interest illumination system according to embodiments of the present invention; and

Figure 3 is a pictorial representation of a ground control system for the object-of-interest illumination system in accordance with an embodiment of the present invention.

### DETAILED DESCRIPTION OF THE PREFERRED EMBODIMENT

An embodiment of the invention includes an unmanned aerial vehicle (UAV) utilizing an onboard gimballed sensor to measure designator spot error relative to a selected object of interest to which, for example, a munition is to be delivered or that is to be marked for recognition by other observers. A closed-loop system mechanically centers the designator beam in a coarse fashion, with fine beam-steering fast mirrors completing the closed-loop designation of a selected image feature.

In an embodiment, a laser designator and camera are bore sighted and mounted together on a gimbaled platform. Onboard digital-image processing hosts feature-extraction algorithms to determine positional error between a laser spot and a selected object of interest, such as a target feature. A gimbaled positioning control receives error input from the feature-extraction algorithm and closes the loop to place the spot over the selected target feature. Operationally, a user of an operator control unit (OCU) on the ground or elsewhere selects a feature (*e.g*., building, military vehicle, *etc*.) to be targeted. The OCU sends this information to the UAV digital-processing function.

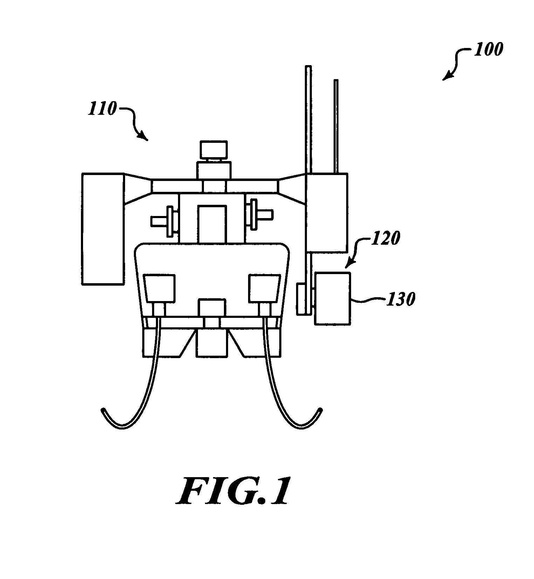

Figure 1 is a pictorial representation of an object-of-interest illumination system 100. The illumination system 100 comprises a platform, such as an unmanned aerial vehicle (UAV) 110, which may be a hovering ducted fan UAV. The UAV 110 preferably has a gimbaled sensor payload 120.

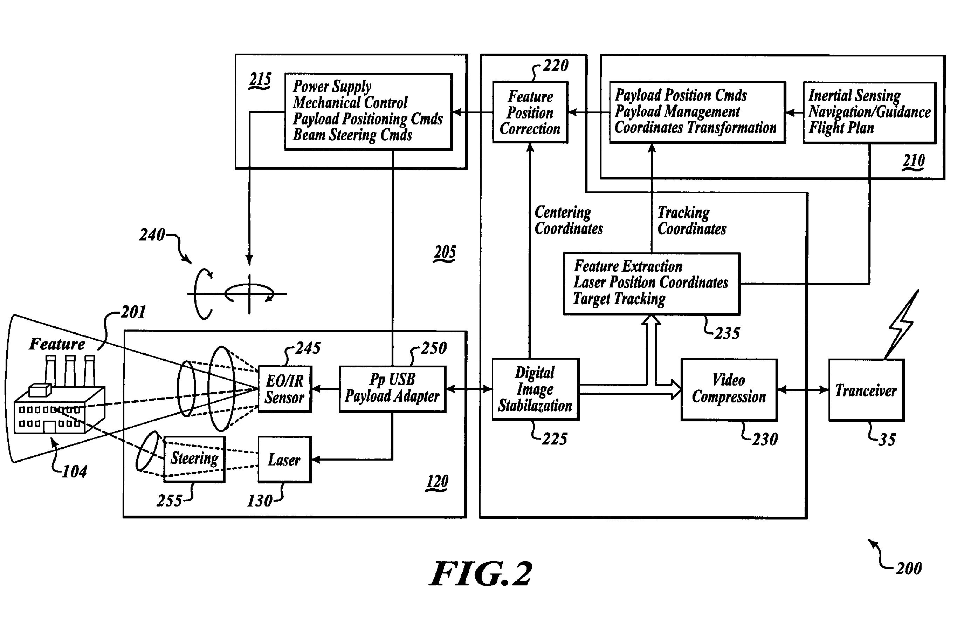

In the embodiment shown and described herein, the gimbaled sensor payload 120 comprises a digital video camera, which may include an EO/IR (electro-optical/infrared) sensor 245 (see Figure 2). In alternative embodiments, different or additional types of sensors may be used, such as motion sensors, heat sensors, audio sensors, or non-visible-light sensors (*e.g*., IR sensors). In addition, more than one type of sensor may be utilized. The choice of sensor type will likely depend on the characteristics of the intended target and those of its surroundings. The sensor payload 120 will have a sensor field of view (FOV) 201 (see Figure 2) associated with it.

An optical transmitter, such as a narrow-beam laser 130 (*e.g*., a gimbaled guidance beam) is shown attached to or otherwise included by the sensor payload 120 and may be used to illuminate a portion of the FOV 201 and guide a munition to or otherwise mark the illuminated portion. The optical transmitter may alternatively emit a visible illuminating signal, or include a collimated optical source other than a laser.

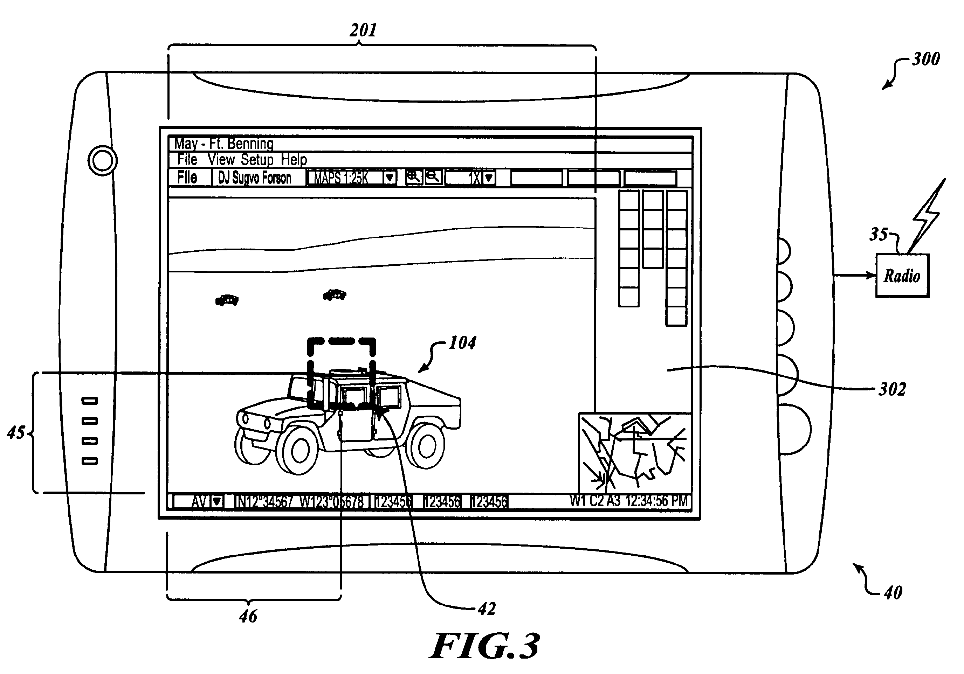

Figure 3 is a pictorial representation of a ground control system 300 used in conjunction with the illumination system 100, in accordance with an embodiment of the present invention. The ground control system 300 includes an operator control unit (OCU) 40, which is preferably some type of portable computer having at least a touch-sensitive display 302, a processor (not shown), and a transceiver (integrated or external) 35 to allow the OCU 40 to communicate with the illumination system 100 to control the UAV 110 and/or to receive video or other information.

The OCU 40 preferably includes a software application that displays information obtained by the sensor payload 120 of the illumination system 100. For example, the information may include a video or image feed to be displayed on the display 302. In the application shown, the display 302 portrays the sensor FOV 201 to user to allow the user to select an object in the FOV 201 using a template 42. The user could, for example, make such a selection by touching the display with a finger or stylus. Based on that selection, the OCU 40 can determine the image coordinates of the selected object (or an identified target within the selected object). Those coordinates may include an X-coordinate 46 (or set of X-coordinates) and a Y-coordinate 45 (or set of Y-coordinates), for example. Additional coordinates and/or alternative coordinate systems could be utilized instead. The OCU 40 can then transmit the image target coordinates 45 and 46 to the UAV 110 to allow the illumination system 100 to guide a munition (not shown) to a selected target 104. (Note that the target shown in Figure 2 differs from that shown in Figure 3. Figures 2 and 3 depict two different, but similar, scenarios.)

Figure 2 is a block diagram illustrating an onboard feature-extraction and processing system 200 that may be utilized in the illumination system 100 according to embodiments of the present invention. The onboard system 200 includes a correction subsystem (generally designated by reference numeral 205), a flight-management subsystem 210, a digital transceiver 35 (for communicating with the ground control system 300), a gimbaled sensor payload 120, and a gimbal controller 215.

The correction subsystem 205 may include the flight-management subsystem 210, a feature position correction module 220, digital-image stabilization module 225, video-compression module 230 to assist digital-image stabilization, and an object-of-interest illumination module 235. The flight-management subsystem 210 can provide one or more of the following functions: inertial sensing, vehicle navigation and guidance, predetermined vehicle flight plan, coordinate transformation, payload management and payload positioning commands. Such functions of the flight-management subsystem 210 may be provided or otherwise supplemented by signals received via transceiver 35. In addition, the transceiver 35 can be used to provide a target feature selection to the object-of-interest illumination module 235, for target-feature extraction, laser-spot-position coordinates and target tracking, all of which can be used by the object-of-interest illumination module 235 to assist in generating payload-positioning and laser-beam-steering commands for the gimbaled sensor payload 120. Additionally, the transceiver 35 receives from video-compression module 230 compressed video data including a plurality of digitally stabilized images of the sensed area (FOV 201), to allow a user of the ground control system 300 to view video from the illumination system 100.

The digital-image-stabilization module 225 can provide centering coordinates to the feature position correction module 220 to provide FOV centering corrections. The feature position correction module 220 may then communicate with the gimbal controller 215 during a closed-loop payload positioning sequence for image stabilized gimbal articulation 240.

According to a preferred embodiment, the gimbaled sensor payload 120 includes an EO/IR sensor 245, laser 130, a plug-play USB payload adapter 250, and a signal-guidance assembly 255, which, in an embodiment, includes one or more reflective mirrors. The USB payload adapter 250 receives an output from the EO/IR sensor 245 and provides a sensor data output to the correction subsystem 205. The USB payload adapter 250 also provides signaling (*e.g*., commands) to the laser 130, EO/IR sensor 245 and/or signal-guidance assembly 255.

In an embodiment, the gimbal controller 215 provides one or more of the following functions: micro-gimbal power supply, micro-gimbal mechanical control, positioning commands for payload 120 and steering commands for signal-guidance assembly 255.

In general, the onboard feature-extraction and processing system 200 provides functionality to support the following: an inertial mechanically gimballized/stabilized sensor payload, digital image feature stabilization, target feature extraction and selection, image feature-based coordinate correction, and optical feature to laser point error closed-loop correction.

In an embodiment, the object-of-interest illumination module 235 receives sensor data from sensor 245 and object-of-interest selection from transceiver 35 as inputs and generates and/or enables generation of beam-steering commands as an output to the signal-guidance assembly 255. The object-of-interest illumination module 235 (or other component of system 200) employs a feature-based processing algorithm configured to distinguish from among discrete features (*e.g*., corners of buildings, windows, trees, *etc*.) to allow association of distinguished features with the selected object of interest and laser-illumination position. The object of interest defined by the user using the OCU 40 is correlated to the sensor data and the image position is extracted. The laser-illumination position (*i.e*., the spatial coordinates of the portion of FOV 201 illuminated by the laser 130) is extracted or otherwise determined, and a position error signal is generated between the object-of-interest position and the laser-illumination position. The direction of the error may be computed relative to the orientation of the laser illumination. Beam-steering commands are then generated based on the determined error, and subsequently issued to the signal-guidance assembly 255, so as to bring the laser spot to bear on the selected object of interest.

While a preferred embodiment of the invention has been illustrated and described, as noted above, many changes can be made. For example, while illustrated embodiments have been described as including or implemented in a UAV, embodiments may include or be implemented in an unmanned ground vehicle, a manned craft or vehicle, or stationary platform. Accordingly, the scope of the invention is not limited by the disclosure of the preferred embodiment. Instead, the invention should be determined entirely by reference to the claims that follow.

## Claims

1. A system (100) for illuminating an object of interest, comprising:
a platform (110);
a gimbaled sensor (120) mounted to the platform, the gimbaled sensor providing sensor data corresponding to a sensed condition associated with an area sensed by the gimbaled sensor, the gimbaled sensor configured to be articulated with respect to the platform;
a first transceiver (35) mounted to the platform for transceiving communications to and from a ground control system, the ground system including an operator control unit having a second transceiver, a display, and a user input mechanism to allow a user to select and transmit to the first transceiver at least one image feature corresponding to the object of interest, the at least one image feature being generated from the sensor data;
an optical transmitter (130) mounted to the platform and configured to emit, in response to the user selection, a signal operable to illuminate a portion of the sensed area proximal to the object of interest, the signal operable to mark the illuminated portion; and
a correction subsystem (205) mounted to the platform and configured to determine an illuminated-portion-to-object-of-interest error and, in response to the error determination, cause the signal to illuminate the object of interest.

2. The system (100) of claim 1 wherein the platform (110) comprises an unmanned aerial vehicle.

3. The system (100) of claim 2, further comprising a flight-management subsystem (210) for controlling movement and positioning of the unmanned aerial vehicle.

4. The system (100) of claim 1 wherein the correction subsystem (205) is further configured to process the received sensor data and identify discrete features of the sensed area based on the received sensor data.

5. The system (100) of claim 4 wherein:
the correction subsystem (205) is further configured to determine a first identified discrete feature corresponding to the selected at least one image feature and a second identified discrete feature corresponding to the illuminated portion; and
the error determination is based on a comparison of the location of the first discrete feature and the location of the second discrete feature.

6. The system (100) of claim 1 wherein the correction subsystem (205) comprises a closed-loop control system and at least one mirror, the closed-loop control system configured to articulate the mirror to steer the signal.

7. The system (100) of claim 1, further comprising a gimbal-control system (215) configured to control articulation of the gimbaled sensor.

8. The system (100) of claim 7 wherein the gimbal-control system (215) is configured to stabilize the sensor based on a sensed condition associated with the selected at least one image feature.

9. The system (100) of claim 1 wherein the optical transmitter (130) comprises a narrow-beam infrared-laser source.

## Patentansprüche

1. System (100) zum Beleuchten eines interessierenden Gegenstands, das Folgendes umfasst:
eine Plattform (110);
einen kardanisch aufgehängten Sensor (120), der an der Plattform angebracht ist, wobei der kardanisch aufgehängte Sensor Sensordaten liefert, die einem detektierten Zustand entsprechen, der einem durch den kardanisch aufgehängten Sensor detektierten Bereich zugeordnet ist, wobei der kardanisch aufgehängte Sensor konfiguriert ist, um mit einem Gelenk in Bezug auf die Plattform angebracht zu sein;
einen ersten Sendeempfänger (35), der an der Plattform angebracht ist, um Nachrichten zu einem Bodensteuerungssystem zu senden und von ihm zu empfangen, wobei das Bodensteuerungssystem eine Bedienungssteuereinheit enthält, die einen zweiten Sendeempfänger, eine Anzeige und einen Anwendereingabemechanismus besitzt, um einem Anwender zu ermöglichen, mindestens eine dem interessierenden Gegenstand entsprechende Bildeigenschaft auszuwählen und an den ersten Sendeempfänger zu übermitteln, wobei die mindestens eine Bildeigenschaft aus den Sensordaten erzeugt ist;
einen optischen Sender (130), der an der Plattform angebracht ist und konfiguriert ist, um als Reaktion auf die Anwenderauswahl ein Signal, das funktionsfähig ist, um einen Abschnitt des detektierten Bereichs in der Nähe des interessierenden Gegenstands zu beleuchten, auszusenden, wobei das Signal funktionsfähig ist, um den beleuchteten Abschnitt zu markieren; und
ein Korrektur-Untersystem (205), das an der Plattform angebracht ist und konfiguriert ist, um einen Fehler zwischen beleuchtetem Abschnitt und interessierendem Gegenstand zu bestimmen, und als Reaktion auf die Fehlerbestimmung zu bewirken, dass das Signal den interessierenden Gegenstand beleuchtet.

2. System (100) nach Anspruch 1, wobei die Plattform (110) eine Drohne umfasst.

3. System (100) nach Anspruch 2, das ferner ein Flugmanagement-Untersystem (210) zum Steuern der Bewegung und der Positionierung der Drohne umfasst.

4. System (100) nach Anspruch 1, wobei das Korrektur-Untersystem (205) ferner dafür ausgelegt ist, die empfangenen Sensordaten zu verarbeiten und diskrete Eigenschaften des detektierten Bereichs anhand der empfangenen Sensordaten auszuweisen.

5. System (100) nach Anspruch 4, wobei:
das Korrektur-Untersystem (205) ferner konfiguriert ist, um eine erste ausgewiesene diskrete Eigenschaft, die der ausgewählten mindestens einen Bildeigenschaft entspricht, und eine zweite ausgewiesene diskrete Eigenschaft, die dem beleuchteten Abschnitt entspricht, zu bestimmen; und
die Fehlerbestimmung auf einem Vergleich der Position der ersten diskreten Eigenschaft und der Position der zweiten diskreten Eigenschaft beruht.

6. System (100) nach Anspruch 1, wobei das Korrektur-Untersystem (205) ein geschlossenes Regelsystem und mindestens einen Spiegel umfasst, wobei das geschlossene Regelsystem konfiguriert ist, um den Spiegel um ein Gelenk zu bewegen, um das Signal zu lenken.

7. System (100) nach Anspruch 1, das ferner ein Kardanrahmen-Steuerungssystem (215) umfasst, das konfiguriert ist, um die Gelenkbewegung des kardanisch aufgehängten Sensors zu steuern.

8. System (100) nach Anspruch 7, wobei das Kardanrahmen-Steuerungssystem (215) konfiguriert ist, um den Sensor anhand eines ermittelten Zustands, der der ausgewählten mindestens einen Bildeigenschaft zugeordnet ist, zu stabilisieren.

9. System (100) nach Anspruch 1, wobei der optische Sender (130) eine Schmalstrahl-Infrarotlaserquelle umfasst.

## Revendications

1. Système (100) permettant d'illuminer un objet présentant un intérêt, comprenant :
une plateforme (110) ;
un détecteur monté à la cardan (120) monté sur la plateforme, le détecteur monté à la cardan produisant des données de détecteur correspondant à une condition détectée associée à une zone détectée par le détecteur monté à la cardan, le détecteur monté à la cardan étant conçu pour être articulé par rapport à la plateforme ;
un premier émetteur-récepteur (35) monté sur la plateforme pour transmettre des communications à destination d'un système de commande au sol et recevoir des communications en provenance de celui-ci, le système au sol comportant une unité de commande d'opérateur possédant un deuxième émetteur-récepteur, un affichage et un mécanisme de saisie d'utilisateur pour permettre à un utilisateur de sélectionner et de transmettre au premier émetteur-récepteur au moins une caractéristique d'image correspondant à l'objet présentant un intérêt, ladite au moins une caractéristique d'image étant générée à partir des données de détecteur ;
un émetteur optique (130) monté sur la plateforme et conçu pour émettre, en réponse à la sélection de l'utilisateur, un signal apte à illuminer une partie de la zone détectée proche de l'objet présentant un intérêt, le signal étant apte à marquer la partie illuminée ; et
un sous-système de correction (205) monté sur la plateforme et conçu pour établir une erreur entre la partie illuminée et l'objet présentant un intérêt et, en réponse à l'établissement de l'erreur, pour amener le signal à illuminer l'objet présentant un intérêt.

2. Système (100) selon la revendication 1, la plateforme (110) comprenant un véhicule aérien sans pilote.

3. Système (100) selon la revendication 2, comprenant en outre un sous-système de gestion de vol (210) servant à commander le mouvement et la position du véhicule aérien sans pilote.

4. Système (100) selon la revendication 1, le sous-système de correction (205) étant en outre conçu pour traiter les données de détecteur reçues et identifier des caractéristiques discrètes de la zone détectée en fonction des données de détecteur reçues.

5. Système (100) selon la revendication 4,
le sous-système de correction (205) étant en outre conçu pour établir une première caractéristique discrète identifiée correspondant à ladite au moins une caractéristique d'image sélectionnée et une deuxième caractéristique discrète identifiée correspondant à la partie illuminée ; et
l'établissement de l'erreur étant fonction d'une comparaison de l'emplacement de la première caractéristique discrète et de l'emplacement de la deuxième caractéristique discrète.

6. Système (100) selon la revendication 1, le sous-système de correction (205) comprenant un système de commande en boucle fermée et au moins un miroir, le système de commande en boucle fermée étant conçu pour articuler le miroir afin d'orienter le signal.

7. Système (100) selon la revendication 1, comprenant en outre un système de commande de cardan (215) conçu pour commander l'articulation du détecteur monté à la cardan.

8. Système (100) selon la revendication 7, le système de commande de cardan (215) étant conçu pour stabiliser le détecteur en fonction d'une condition détectée associée à ladite au moins une caractéristique d'image sélectionnée.

9. Système (100) selon la revendication 1, l'émetteur optique (130) comprenant une source laser infrarouge à faisceau étroit.
